# EUROPEAN PATENT APPLICATION

(11) **EP 3 988 944 A1**
(43) Date of publication of application: **27.04.2022**
(21) Application number: 20830870.0
(22) Date of filing: 23.06.2020
(51) Int. Cl.: G01N 35/10

(54) **AUTOMATIC ANALYSIS DEVICE**

(30) Priority: 24.06.2019 JP 2019116087
(71) Applicant: Sekisui Medical Co., Ltd., Tokyo 103-0027 (JP)
(72) Inventor: ISHIOKA, Seiichiro, Tokyo 103-0027 (JP); MINAMI, Yasuo, Tokyo 103-0027 (JP); ASAI, Tomohide, Tokyo 103-0027 (JP); IWAHASHI, Kyoichi, Tokyo 103-0027 (JP)
(74) Representative: Schäfer, Matthias W.
(86) International application number: PCT/JP2020/024562
(87) International publication number: WO 2020/262361

(57) **Abstract**

There is provided an automated analysis device capable of transferring a reagent for reagent dispensing efficiently and rapidly. An automated analysis device of the invention includes a reagent transfer unit 80 to transfer a reagent suction nozzle 90 between a reaction unit 40 and a reagent supply unit 30. In a region of an analyte processing space S where a tip supply unit 70, the reagent supply unit 30, a tip disposal unit 25, and the reaction unit 40 are lined up along a straight line, the reagent transfer unit 80 forms a uniaxial transfer line L2 where the reagent suction nozzle 90 is moved only in a uniaxial direction along the straight line for a reagent transfer.

## Description

### TECHNICAL FIELD

The present invention relates to an automated analysis device capable of obtaining measurement information on various analysis items by processing a sample (analyte) such as blood or urine with various reagents, and by measuring the processed sample.

### BACKGROUND ART

In the related art, various forms of automated analysis devices such as a blood coagulation analysis device and an analysis and measurement device using immunoassay are known which are capable of obtaining measurement information on various analysis items by processing a biological sample such as blood or urine with various reagents, and by measuring the processed biological sample. For example, an analyte as a biological sample is dispensed from an analyte container into a reaction container, the dispensed analyte is mixed with a reagent according to a measurement item, and various measurements and analyses are performed thereon.

The analyte and the reagent are dispensed into the reaction container, generally, by moving a nozzle between an analyte suction position and the reaction container and between a reagent suction position and the reaction container by means of a transfer mechanism that is movable in an X-Y direction (for example, refer to Patent Document 1).

### CITATION LIST

### PATENT DOCUMENT

Patent Document 1: JP 2005-98960 A

### SUMMARY OF THE INVENTION

### PROBLEM TO BE SOLVED BY THE INVENTION

However, when the nozzle is moved in two or more directions to transfer the analyte and the reagent, a transfer step becomes complicated, and a two-dimensional transfer space has to be secured. Hence, the size of the entire device is increased, the degree of freedom in device design is limited, and the entire analysis process time is also lengthened.

The invention is conceived in light of the above problems, and an object of the invention is to provide an automated analysis device capable of transferring a reagent for reagent dispensing efficiently and rapidly.

### MEANS FOR SOLVING PROBLEM

In order to achieve the above object, according to an aspect of the invention, there is provided an automated analysis device to obtain measurement information on a predetermined analysis item by processing an analyte and by measuring the processed analyte in an analyte processing space, the device including: a reaction unit to hold a reaction container where the analyte is to be dispensed; a reagent supply unit to supply a reagent; a reagent transfer unit to transfer a reagent suction nozzle between the reaction unit and the reagent supply unit; a tip supply unit to supply a reagent suction tip to be connected to a distal end of the reagent suction nozzle; and a tip disposal unit to dispose of the reagent suction tip. In a region of the analyte processing space where the tip supply unit, the reagent supply unit, the tip disposal unit, and the reaction unit are lined up along a straight line, the reagent transfer unit forms a uniaxial transfer line where the reagent suction nozzle is moved only in a uniaxial direction along the straight line for a reagent transfer.

In the automated analysis device with the above configuration, in the region of the analyte processing space where the tip supply unit, the reagent supply unit, the tip disposal unit, and the reaction unit are lined up along a straight line, the reagent transfer unit to transfer the reagent suction nozzle between the reaction unit and the reagent supply unit forms the uniaxial transfer line where the reagent suction nozzle is moved only in the uniaxial direction along the straight line for a reagent transfer. Therefore, the reagent can be transferred for reagent dispensing efficiently and rapidly. Namely, since securing a one-dimensional transfer space is only required, the space can be saved, and a transfer step can be simplified more, the degree of freedom in device design can be improved more, the entire analysis process time can be shortened more than in a reagent transfer mechanism to move the reagent suction nozzle in two or more directions. In addition, a plurality of the uniaxial transfer lines can be provided as much as the space is saved, so that a simultaneous transfer of a plurality of the reagents can improve work efficiency.

In addition, in the above configuration, when a nozzle cleaning unit to clean the reagent suction nozzle is provided, it is preferable that the nozzle cleaning unit is also included on the uniaxial transfer line. In this case, it is preferable that the tip supply unit is located outside the analyte processing space on a side opposite the reaction unit and the nozzle cleaning unit with respect to the reagent supply unit. When the tip supply unit is provided so as not to be included on the transfer line on an inner side as described above, foreign objects (contaminants) or the reagent can be prevented from adhering to the tip of the tip supply unit, which is beneficial.

In addition, in the above configuration, it is preferable that the reagent suction tip is conductive and thus can be used for reagent level detection using a capacitance method. Generally, in reagent suctioning only by the reagent suction nozzle, normally, since the reagent suction nozzle is made of metal, the reagent level can be detected by the capacitance method when the reagent is suctioned in the reagent supply unit by the reagent suction nozzle (when the reagent suction nozzle is lowered toward the reagent for reagent suctioning). However, in the case where an analysis item is analyzed for which a nozzle is difficult to share with a normal analysis item, when the tip is connected to the distal end of the reagent suction nozzle as needed, the reagent level cannot be detected by the capacitance method, generally, since the tip is made of resin. Hence, a conductive tip produced by infiltrating the tip with carbon, etc. is used, so that the reagent level can be detected by the capacitance method.

In addition, in the above configuration, it is preferable that the reagent suction tip is to be connected to a proximal portion of the reagent suction nozzle. When the reagent suction tip is connected to the proximal portion of the reagent suction nozzle as described above, contamination of the distal end of the nozzle can be prevented more than the case where the reagent suction tip is connected to the distal end of the reagent suction nozzle.

In addition, in the above configuration, the nozzle cleaning unit and the tip disposal unit may be provided between the reagent supply unit and the reaction unit, the nozzle cleaning unit may be provided beside the reagent supply unit, and the tip disposal unit may be provided beside the reaction unit.

### EFFECT OF THE INVENTION

According to the automated analysis device of the invention, in the region of the analyte processing space where the tip supply unit, the reagent supply unit, the tip disposal unit, and the reaction unit are lined up along a straight line, the reagent transfer unit to transfer the reagent suction nozzle between the reaction unit and the reagent supply unit forms the uniaxial transfer line where the reagent suction nozzle is moved only in the uniaxial direction along the straight line for a reagent transfer. Therefore, the reagent can be transferred for reagent dispensing efficiently and rapidly.

### BRIEF DESCRIPTION OF DRAWINGS

Fig. 1 is an overall schematic exterior view of an automated analysis device according to one embodiment of the invention;
Fig. 2 is a schematic plan view illustrating an internal configuration of the automated analysis device in Fig. 1;
Fig. 3(a) is a plan view of a uniaxial reagent transfer line, and Fig. 3(b) is a side view of the uniaxial reagent transfer line; and
Fig. 4 is a cross-sectional view illustrating a state where a reagent suction tip is connected to a proximal portion of a reagent suction nozzle.

### MODE(S) FOR CARRYING OUT THE INVENTION

Hereinafter, an embodiment of the invention will be described with reference to the drawings.

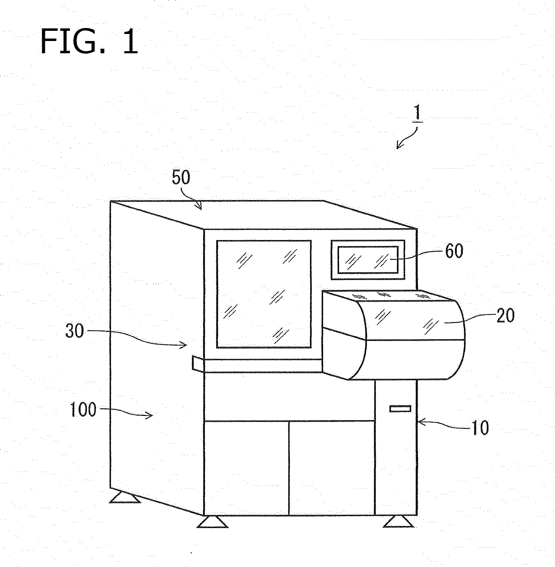

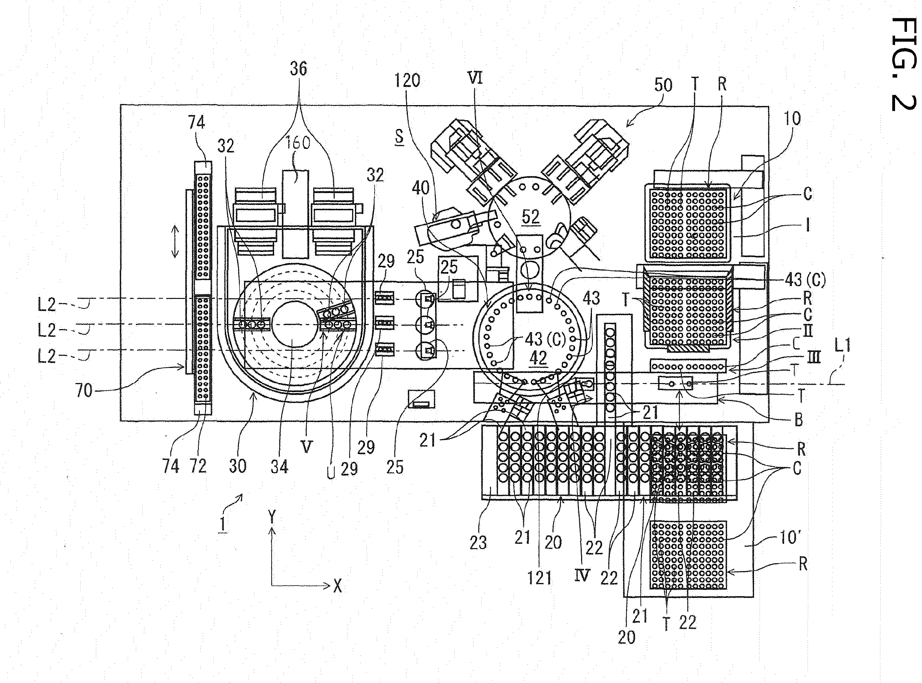

Fig. 1 is an overall schematic exterior view of an automated analysis device of the present embodiment, and Fig. 2 is a schematic plan view illustrating an internal configuration of the automated analysis device in Fig. 1. As illustrated in these drawings, an automated analysis device 1 of the present embodiment includes a conveyance unit 10 to convey a rack; an analyte supply unit 20 to supply a predetermined analyte such as a biological sample; a reagent supply unit 30 to supply a reagent corresponding to a predetermined analysis item; a reaction unit 40 to cause the analyte and the reagent to react with each other; and a processing and measurement unit (in the present embodiment, for example, a B/F separation and measurement unit to be described later) 50 to process the reacted analyte and to measure the processed analyte. The processing units 10, 20, 30, 40, and 50 are disposed inside a housing 100 (refer to Fig. 1). The conveyance unit 10 conveys a rack loaded with a predetermined number of disposable instruments to be used by the automated analysis device 1, for example, in the present embodiment, a rack R in which 60 nozzle tips T to suction the analyte and 60 reaction containers (for example, cuvettes) C into which the analyte is to be dispensed are arranged and held two-dimensionally, to a predetermined instrument extraction position II to be described later.

In addition, the automated analysis device 1 further includes a controller (not illustrated) to control operation of the processing units 10, 20, 30, 40, and 50, and a transfer mechanism (not illustrated) including various transfer units to move in an X-Y direction above the processing units 10, 20, 30, 40, and 50. The transfer mechanism includes, for example, an instrument transfer unit, an analyte transfer unit, a reagent transfer unit, a measurement target transfer unit, etc. The transfer mechanism is capable of grasping an instrument such as the nozzle tip T or the reaction container C using a grasping arm, etc., and moving the instrument in the X-Y direction so as to transfer the nozzle tip T, the reaction container C, etc., or to suction the analyte and the reagent by means of a nozzle. The controller includes a control device body (not illustrated) and a display input unit 60 formed of, for example, a touch panel. Each transfer unit of the transfer mechanism is movable in an X direction and a Y direction in an upper portion inside the housing 100, for example, along rails extending in the X direction and the Y direction, and is further movable (raisable and lowerable) in a vertical direction (Z direction) at a predetermined position.

The conveyance unit 10 conveys a plurality of the racks R loaded with unused nozzle tips T and unused reaction containers C inside the device 1 as follows. First, the plurality of racks R are raised in a vertically stacked state by a lifting mechanism to be conveyed toward a rack standby position (supply side position) I in a space S in which various processing is to be performed on the analyte, etc. in the upper portion inside the housing 100 (hereinafter, simply referred to as a processing space). Thereafter, the racks R are moved from the rack standby position I to an extraction position (retrieval side position) II at which the nozzle tips T and the reaction containers C are to be extracted for analysis and measurement processing, and stand by for a transfer to a tip and reaction container standby position III by the instrument transfer unit. In addition, the racks R that are emptied by extraction of all the nozzle tips T and the reaction containers C are lowered sequentially by the lifting mechanism, and are retrieved.

Specifically, as indicated by an arrow in Fig. 2, an operator can draw the conveyance unit 10 to the outside of the device 1 along the Y direction (conveyance unit that is drawn out is denoted by reference sign 10' in Fig. 2) to retrieve the empty racks R from the conveyance unit 10, and to replenish the conveyance unit 10 with unused racks R loaded with the nozzle tips T and the reaction containers C.

In addition, in the present embodiment, the nozzle tip T and the reaction container C inside the rack R to be located at the extraction position II are held and transferred by a holding portion of the instrument transfer unit that is one transfer unit of the transfer mechanism, provisionally to be placed at the tip and reaction container standby position III located in the vicinity of the conveyance unit 10. However, in another modification example, the reaction container C may be directly transferred from the rack R to the reaction unit 40 and set by the holding portion of the instrument transfer unit without passing through the tip and reaction container standby position III.

Incidentally, as illustrated in Fig. 2, not only a place for the nozzle tips (position below the standby position III, at which two nozzle tips T and/or reaction containers C are illustrated) but also a place in which an operator can replace each rack including the nozzle tips T and/or the reaction containers C with a hand (position above the standby position III, at which one rack is illustrated) can be provided at the tip and reaction container standby position III.

The analyte supply unit 20 is disposed on an analyte table 23 that is movable along the X direction in Fig. 2, and a plurality of analyte racks 22 each having a box shape are arranged, for example, along a movement direction of the analyte table 23. In addition, each of the analyte racks 22 is loaded with a plurality of analyte containers 21, and each of the analyte containers 21 stores the analyte to be analyzed and measured. Particularly, in the present embodiment, for example, an operation mode is carried out in which the analyte supply unit 20 to be located on a right side in Fig. 2 moves to a left side in Fig. 2 at a predetermined timing in an analysis sequence of the automated analysis device 1, and one analyte rack 22 including the plurality of analyte containers 21 is transferred to an analyte suction position IV between the reaction unit 40 and the tip and reaction container standby position III, and stands by at this position.

Since the tip and reaction container standby position III is provided, a first uniaxial transfer line (analyte transfer line) L1 on which the tip and reaction container standby position III, the analyte suction position IV, and at least a part of the reaction unit 40 are lined up along a straight line is formed in the processing space S. For this reason, a series of operations such as the installation of the analyte suction nozzle to the nozzle tip T, the suctioning of the analyte, and the dispensing of the analyte into the reaction containers can be completed only by a movement of the analyte transfer unit (not illustrated) including an analyte suction nozzle along the first uniaxial transfer line in a uniaxial direction (X-axis direction). Incidentally, the uniaxial direction referred to here means that a movement direction on an X-Y plane which is a transfer direction is uniaxial. After the analyte transfer unit moves in the uniaxial direction on the X-Y plane to reach a desired position, the analyte transfer unit moves in the Z direction (height direction) for an operation to install the nozzle tip or to suction or dispense the analyte, etc. Specifically, first, the analyte suction nozzle (not illustrated) is moved in a positive direction of an X axis (right direction in Fig. 2) by the analyte transfer unit, and the nozzle tip T placed at the tip and reaction container standby position III provisionally is to be connected to a distal end of the analyte suction nozzle (when connected, the analyte suction nozzle is raised and lowered in a Z-axis direction by the analyte transfer unit). Thereafter, the analyte suction nozzle is further moved in a negative direction of the X axis (left direction in Fig. 2) while holding the nozzle tip T at the distal end, suctions the analyte through the nozzle tip T from the analyte container 21 that stands by at the analyte suction position IV, and is further moved toward the reaction unit 40 in the negative direction of the X axis.

At this time, the unused reaction container C placed at the tip and reaction container standby position III provisionally is already transferred to and set in the reaction unit 40 by the above-described instrument transfer unit, and is on standby. Therefore, the analyte suction nozzle dispenses (discharges) the analyte, which is suctioned through the nozzle tip T, into the reaction container C on the reaction unit 40. Thereafter, the analyte transfer unit moves the analyte suction nozzle in the positive direction of the X axis toward a tip disposal unit 121 located on the first uniaxial transfer line L1 (provided between the reaction unit 40 and the analyte suction position IV), and the used nozzle tip T is separated from the analyte suction nozzle, and is disposed of by the tip disposal unit 121.

The reaction unit 40 includes a rotary table 42 that is to be driven rotationally, and a plurality of reaction container-supporting portions 43 are provided at predetermined intervals over an entire periphery of an outer peripheral portion of the rotary table 42. The unused reaction container C is transferred to and set in the reaction container-supporting portion 43 by the instrument transfer unit including the holding portion as described above. Then, as described above, the analyte is discharged from the analyte suction nozzle into the reaction container C that is rotated to an analyte receiving (dispensing) position by the rotary table 42.

In the reagent supply unit 30, a plurality of reagent storage portions 32 that store reagents corresponding to various types of analysis items are held, for example, in a unit form by a rotary table 34, and the reagent storage portion 32 corresponding to an analysis item in the reaction unit 40 is moved to each corresponding reagent suction position V by rotation of the rotary table 34 (only one reagent suction position is denoted by reference sign V in Fig. 2) located on a second uniaxial transfer line L2 to be described later. The reagent supply unit 30 of the present embodiment includes a plurality of reagent storage units U, and a predetermined number of the reagent storage units U are radially arranged in a circumferential direction of the rotary table 34. Each of the reagent storage units U stores and holds an elongated container unit, in which reagent containers including the plurality (three in the drawing) of reagent storage portions 32 are connected or integrally formed, inside a container holder. In addition, the reagent supply unit 30 further includes a cooling device 36 to cool the reagent, and a reagent container lid opening and closing mechanism 160 to open and close a container lid that opens and closes an opening of each of the reagent storage portions 32 forming the reagent storage unit U.

A conductive tip supply unit 70 is provided outside the reagent supply unit 30, namely, at a position that is adjacent to the reagent supply unit 30 and is opposite the reaction unit 40. The conductive tip supply unit 70 includes a rack 74 loaded with a plurality of conductive tips 72, and connects the conductive tip 72 to a distal end of a reagent suction nozzle as needed when an analysis item is analyzed for which a nozzle is difficult to share with a normal analysis item. Specifically, the conductive tip supply unit 70 moves the rack 74 along the Y direction under position control using a position sensor, to locate the conductive tips 72 on the rack 74 on the second uniaxial transfer line L2 to be described later. Incidentally, a plurality (three in the present embodiment) of nozzle cleaning units 29 to clean the reagent suction nozzle and a plurality (three in the present embodiment) of tip disposal units 25 to dispose of the tip are provided between the reagent supply unit 30 and the reaction unit 40 to be located on the second uniaxial transfer line L2 to be described later.

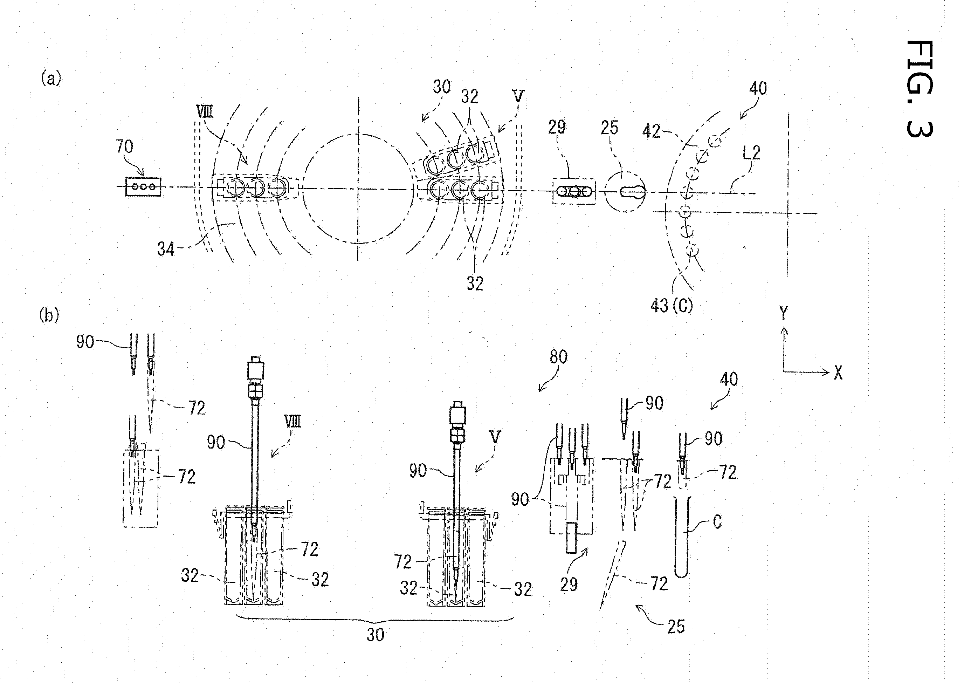

In a region of the processing space S in which the conductive tip supply unit 70, the reagent supply unit 30, the nozzle cleaning unit 29, the tip disposal unit 25, and the reaction unit 40 are lined up along a straight line, the second uniaxial transfer line (reagent transfer line) L2 is formed on which a reagent transfer unit 80 (refer to Fig. 3) for a reagent transfer that is one transfer unit of the transfer mechanism moves only in the uniaxial direction (X-axis direction) along the straight line. Particularly, in the present embodiment, since the three nozzle cleaning units 29 and the three tip disposal units 25 are provided, three second uniaxial transfer lines L2 are also provided (certainly, the number of the second uniaxial transfer lines L2 is not limited to 3, and may be 4 or more or may be 2 or less) . Specifically, a holding portion that holds the reagent suction nozzle (not illustrated) is moved only in the X-axis direction along each of the second uniaxial transfer lines L2 by the reagent transfer unit 80.

Regarding a normal analysis item, the reagent suction nozzle corresponding to each of the second uniaxial transfer lines L2 directly suctions a reagent corresponding to an analysis item from the reagent storage portion 32 to be located at the reagent suction position V on the rotary table 34 through a nozzle suction portion at a distal end of the reagent suction nozzle in the reagent supply unit 30, and thereafter, is moved in the positive direction of the X axis toward the reaction unit 40. At this time, in the reaction unit 40, the reaction container C that has already received the analyte at the above-described analyte receiving position is rotated to a reagent receiving position by the rotary table 42. Therefore, the reagent suction nozzle is capable of dispensing (discharging) the suctioned reagent into the reaction container C. Thereafter, the reagent suction nozzle is moved along the negative direction of the X axis, and is cleaned in the nozzle cleaning unit 29.

On the other hand, in the case where an analysis item is analyzed for which a nozzle is difficult to share with a normal analysis item, for example, when nozzle cleaning alone is not sufficient, the conductive tip 72 may be connected to the distal end of the reagent suction nozzle as needed. In such a case, it is preferable that the conductive tip 72 is connected to the distal end of the reagent suction nozzle in the conductive tip supply unit 70 on the second uniaxial transfer line L2 before the reagent is suctioned in the reagent supply unit 30 (when connected, the reagent suction nozzle is raised and lowered in the Z-axis direction by the reagent transfer unit 80). When the conductive tip 72 is connected, the reagent suction nozzle is further moved in the positive direction of the X axis while holding the conductive tip 72 at the distal end, and suctions the reagent through the conductive tip 72 in the reagent supply unit 30. The reagent suction nozzle that has suctioned the reagent is further moved in the positive direction of the X axis toward the reaction unit 40, and dispenses (discharges) the reagent into the reaction container C located at the reagent receiving position as described above. Thereafter, the used reagent suction nozzle is moved in the negative direction of the X axis toward a corresponding tip disposal unit 25 of the tip disposal units 25 by the reagent transfer unit 80, and the used conductive tip 72 is separated from the reagent suction nozzle, and is disposed of by the tip disposal unit 25.

A mixed liquid of the analyte and the reagent dispensed into the reaction container C as described above in the reaction unit 40 is subjected to a reaction on the rotary table 42 at a predetermined temperature for a predetermined time, and thereafter, the reaction container C in which a reaction product is formed is rotated to a reaction container extraction position VI by rotation of the rotary table 42. The reaction container C located at the reaction container extraction position VI is grasped and introduced into the processing and measurement unit 50 by a holding portion (grasping arm, etc.) to be transferred by the measurement target transfer unit (not illustrated) that is one transfer unit of the transfer mechanism.

The processing and measurement unit 50 performs predetermined processing on the introduced reaction product, and executes measurement electrically and optically. Specifically, for example, in analysis and measurement using immunoassay, B/F separation is performed to clean and dispose of a labeled antibody that does not form an immune complex, a cleaning unit and a stirring unit for that purpose and a magnet to be used for the B/F separation are provided, and a measurement unit 120 is also provided which suctions a processed product processed thereby to measure the processed product on a lower side based on electrochemiluminescence. In that case, the processing and measurement unit 50 may be called a B/F separation and measurement unit 50. Incidentally, the used reaction container C on which the measurement is completed is moved to a predetermined position by rotation of a rotary table 52, is grasped by a holding portion to be transferred by a measurement target transfer unit (not illustrated) that is one transfer unit of the transfer mechanism, and is disposed of by a predetermined disposal unit.

By the way, in the present embodiment, as described above, the reagent transfer unit 80 to transfer the reagent suction nozzle between the reaction unit 40 and the reagent supply unit 30 forms the second uniaxial transfer line (reagent transfer line) L2. One specific example of such a second uniaxial transfer line L2 is illustrated in Fig. 3.

As illustrated in Fig. 3, in the region of an analyte processing space S in which the conductive tip supply unit 70, the reagent supply unit 30, the tip disposal unit 25, and the reaction unit 40 are lined up along a straight line, the reagent transfer unit 80 to transfer a reagent suction nozzle 90 between the reaction unit 40 and the reagent supply unit 30 forms the second uniaxial transfer line L2 on which the reagent suction nozzle 90 is moved only in the uniaxial direction along the straight line for a reagent transfer. Particularly, in the present embodiment, the nozzle cleaning unit 29 to clean the reagent suction nozzle 90 is also included on the second uniaxial transfer line L2.

As can be seen from Fig. 3(b), as described above, the reagent suction nozzle 90 moves only in the X-axis direction on the second uniaxial transfer line L2 by the reagent transfer unit 80 that holds the reagent suction nozzle 90. The reagent suction nozzle 90 directly suctions a reagent corresponding to an analysis item from the reagent storage portion 32 to be located at the reagent suction position V on the rotary table 34 in the reagent supply unit 30 through a nozzle suction portion at a distal end of the reagent suction nozzle 90, and thereafter, is moved in the positive direction of the X axis toward the reaction unit 40. At this time, in the reaction unit 40, the reaction container C that has already received the analyte at the above-described analyte receiving position is rotated to a reagent receiving position by the rotary table 42. The reagent suction nozzle 90 dispenses (discharges) the suctioned reagent into the reaction container C. Thereafter, the reagent suction nozzle 90 is moved in the negative direction of the X axis, and is cleaned in the nozzle cleaning unit 29.

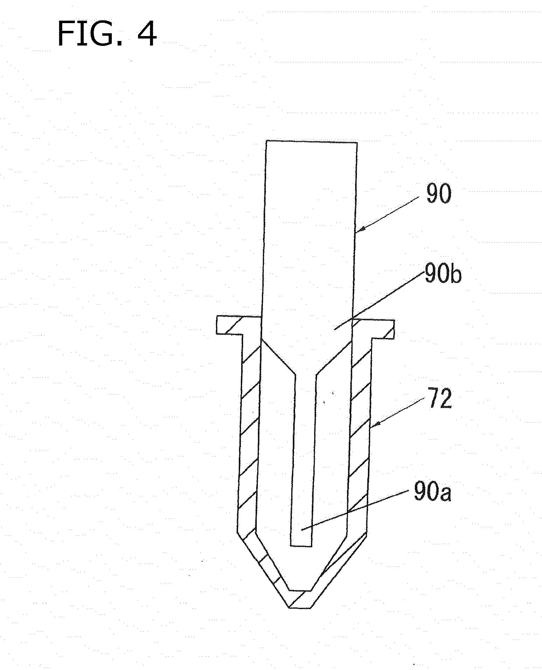

On the other hand, there is a case where an analysis item is to be analyzed for which a reagent suction nozzle is difficult to share with a normal analysis item. For example, when nozzle cleaning alone is not sufficient, the conductive tip 72 may be connected to the distal end of the reagent suction nozzle 90 as needed. In such a case, before the reagent is suctioned in the reagent supply unit 30, the conductive tip 72 is connected to the distal end of the reagent suction nozzle 90 in the conductive tip supply unit 70. Thereafter, the reagent suction nozzle 90 is further moved in the positive direction of the X axis while holding the conductive tip 72 at the distal end, and suctions the reagent from the reagent bottle 32 to be located at the reagent suction position V in the reagent supply unit 30 through the conductive tip 72. When the reagent is suctioned, specifically, when the reagent suction nozzle 90 to which the conductive tip 72 is connected is lowered toward the reagent, reagent level detection using a capacitance method is performed by using the conductive tip 72 (detecting that the conductive tip 72 reaches a reagent level so that the reagent can be reliably suctioned) . Generally, in the above-described reagent suctioning only by the reagent suction nozzle 90, since the reagent suction nozzle 90 is made of metal, the reagent level can be detected by the capacitance method when the reagent is suctioned in the reagent supply unit 30 by the reagent suction nozzle 90. However, when a tip is connected to the distal end of the reagent suction nozzle 90, the reagent level cannot be detected by the capacitance method, generally, since the tip is made of resin. In such a case, reagent level detection using the capacitance method can be performed by replacing the tip with the conductive tip 72 as in the present embodiment. In addition, in the present embodiment, as illustrated in Fig. 4, the conductive tip 72 is to be connected to a proximal portion 90b of the reagent suction nozzle 90. When the conductive tip 72 is connected to the proximal portion 90b of the reagent suction nozzle 90 as described above, contamination of the distal end of the nozzle 90 can be prevented more than the case where the conductive tip 72 is connected to a distal end 90a of the reagent suction nozzle 90.

After the reagent is suctioned from the reagent bottle 32 through the conductive tip 72 as described above, the reagent suction nozzle 90 is further moved in the positive direction of the X axis toward the reaction unit 40, and dispenses (discharges) the reagent into the reaction container C located at the reagent receiving position as described above. Thereafter, the reagent suction nozzle 90 is moved in the negative direction of the X axis toward a corresponding tip disposal unit 25 of the tip disposal units 25, and the used conductive tip 72 is separated from the reagent suction nozzle 90, and is disposed of by the tip disposal unit 25.

As described above, in the automated analysis device 1 of the present embodiment, in the region of the processing space S, the uniaxial transfer line L2 is formed on which the conductive tip supply unit 70, the reagent supply unit 30, the tip disposal unit 25, and the reaction unit 40 are lined up along a straight line. For this reason, merely when the reagent transfer unit 80 to transfer the reagent suction nozzle 90 between the reaction unit 40 and the reagent supply unit 30 moves only in the uniaxial direction along the uniaxial transfer line L2, the reagent can be transferred, and the reagent can be transferred for reagent dispensing efficiently and rapidly. Namely, since securing a one-dimensional transfer space is only required, the space can be saved, and the transfer step can be simplified more than in a reagent transfer mechanism to move the reagent suction nozzle in two or more directions. In addition, the degree of freedom in device design can be improved, and the entire analysis process time can also be shortened. Further, as in the present embodiment, three uniaxial transfer lines L2 can be provided as much as the space is saved, so that a simultaneous transfer of a plurality of reagents can improve work efficiency.

In addition, in the present embodiment, since the conductive tip supply unit 70 is located outside the processing space on a side opposite the reaction unit 40 and the nozzle cleaning unit 29 with respect to the reagent supply unit 30, namely, since the conductive tip supply unit 70 is provided so as not to be included on the transfer line on an inner side, foreign objects (contaminants) or the reagent can be prevented from adhering to the conductive tip 72 of the conductive tip supply unit 70.

Incidentally, the invention is not limited to the above-described embodiment, and various modifications can be carried out without departing from the concept of the invention. For example, in the above-described embodiment, the nozzle tip T and the reaction container C are used for an analysis process; however, the instruments to be used for the analysis process are not limited thereto. Such instruments may be appropriately changed according to the type of an analysis process. In addition, the configurations and the forms of the processing units of the analysis device are not also limited to those described above, and can be variously changed according to the application. In addition, in the above-described embodiment, the uniaxial transfer lines L1 and L2 extend in the X direction, but may extend in the Y direction.

Further, individual configurations described in the various embodiments described in the specification, such as the structure of the rack, the structure of the analyte or reagent holding portion, the conveyance unit to move and retrieve the rack, the reagent lid opening and closing mechanism, the configuration where the analyte transfer line or the reagent transfer line is aligned with the uniaxial transfer line L1 or L2, and other individual configurations can also be extracted from each of the embodiments as needed, and combined appropriately.

In addition, the specific positions I to IX described in the embodiment are provided as an example, and can be appropriately changed to positions conforming to conditions required by the invention described in the specification.

### EXPLANATIONS OF LETTERS OR NUMERALS

- 1: AUTOMATED ANALYSIS DEVICE
- 25: TIP DISPOSAL UNIT
- 29: NOZZLE CLEANING UNIT
- 30: REAGENT SUPPLY UNIT
- 40: REACTION UNIT
- 70: TIP SUPPLY UNIT
- 72: CONDUCTIVE TIP (REAGENT SUCTION TIP)
- 80: REAGENT TRANSFER UNIT
- 90: REAGENT SUCTION NOZZLE
- C: REACTION CONTAINER (INSTRUMENT)
- S: ANALYTE PROCESSING SPACE
- T: NOZZLE TIP (INSTRUMENT)

## Claims

1. An automated analysis device to obtain measurement information on a predetermined analysis item by processing an analyte and by measuring the processed analyte in an analyte processing space, the device comprising:
a reaction unit to hold a reaction container where the analyte is to be dispensed;
a reagent supply unit to supply a reagent;
a reagent transfer unit to transfer a reagent suction nozzle between the reaction unit and the reagent supply unit;
a tip supply unit to supply a reagent suction tip to be connected to a distal end of the reagent suction nozzle; and
a tip disposal unit to dispose of the reagent suction tip,
wherein in a region of the analyte processing space where the tip supply unit, the reagent supply unit, the tip disposal unit, and the reaction unit are lined up along a straight line, the reagent transfer unit forms a uniaxial transfer line where the reagent suction nozzle is moved only in a uniaxial direction along the straight line for a reagent transfer.

2. The automated analysis device according to claim 1, further comprising:
a nozzle cleaning unit to clean the reagent suction nozzle,
wherein the nozzle cleaning unit is also included on the uniaxial transfer line.

3. The automated analysis device according to claim 2,
wherein the tip supply unit is located outside the analyte processing space on a side opposite the reaction unit and the nozzle cleaning unit with respect to the reagent supply unit.

4. The automated analysis device according to any one of claims 1 to 3,
wherein the reagent suction tip is conductive, and is used for reagent level detection using a capacitance method.

5. The automated analysis device according to any one of claims 1 to 4,
wherein the reagent suction tip is to be connected to a proximal portion of the reagent suction nozzle.

6. The automated analysis device according to any one of claims 2 to 5,
wherein the nozzle cleaning unit and the tip disposal unit are provided between the reagent supply unit and the reaction unit, the nozzle cleaning unit is provided beside the reagent supply unit, and the tip disposal unit is provided beside the reaction unit.
